# EUROPEAN PATENT SPECIFICATION

(11) **EP 1 056 034 B1**
(45) Date of publication and mention of the grant of the patent: **28.05.2003**
(21) Application number: 00203127.6
(22) Date of filing: 04.11.1994
(51) Int. Cl.: G06K 7/10, G06K 7/06, G06K 13/08, G06K 17/00

(54) **A data communication adaptor**
Datenübertragungsadapter
Adapteur de communication de données

(30) Priority: 09.11.1993 JP 30483693; 09.11.1993 JP 30483793; 09.11.1993 JP 30483593; 09.11.1993 JP 30484693; 09.11.1993 JP 30483493
(43) Date of publication of application: 29.11.2000
(62) Divisional of application: 94402489.2
(73) Proprietor: FUJITSU LIMITED, Kawasaki-shi, Kanagawa 211-8588 (JP)
(72) Inventor: Obato, Takao, Tokyo 206 (JP); Kumagai, Mitsuaki, Tokyo 206 (JP); Iura, Akihiko, Kawasaki-shi, Kanagawa 211-8588 (JP); Murata, Akio, Kawasaki-shi, Kanagawa 211-8588 (JP); Yamamoto, Shinji, Kawasaki-shi, Kanagawa 211-8588 (JP); Sato, Makoto, Tokyo 206 (JP); Okawado, Akira, Tokyo 206 (JP); Tsurumaru, Shinichiro, Kawasaki-shi, Kanagawa 211-8588 (JP); Miyata, Maki, Yokohama-shi, Kanagawa 226 (JP); Kobayashi, Toshiyuki, Tokyo 206 (JP); Akasawa, Nobuaki, Tokyo 206 (JP); Okano, Masahiko, Tokyo 206 (JP); Miyanaga, Takao, Tokyo 206 (JP)
(74) Representative: Joly, Jean-Jacques

(56) References cited:
- US-A- 5 175 869

## Description

### BACKGROUND OF THE INVENTION

### 1. Field of the Invention

The present invention relates to a data communication adaptor in particular for use with an information processing system using a portable terminal unit.

### 2. Description of the Related Art

In recent years, portable terminal units such as hand-held terminals (HHTs) are widely used for managing commodities, reading gas and electric meters, and the like.

Generally, a hand-held terminal has a keyboard to input data, a display such as a liquid crystal display, and a printer. Various data are entered into the hand-held terminal, and the entered data are displayed. Since the hand-held terminal is hand-carried, it is designed to be compact and light. A hand-held terminal often. employs a memory card such as an IC card as an external storage medium. The memory card stores data entered into the hand-held terminal. The memory card is usually installed in the hand-held terminal from an upper end or a lower end thereof by a memory card loading mechanism installed therein.

However, the locations of the keyboard, the display, and the printer are more or less limited due to the method of use conditions thereof. Further, the hand-held terminal usually incorporates a battery, a modem for communicating data to a larger apparatus, and a connector for connecting the hand-held terminal to the larger apparatus whose position is generally fixed. Accordingly, the position for inserting the memory card is also limited and the width and thickness of the hand-held terminal may be increased by the installation of the memory card, thus having a negative effect on the compactness of the hand-held terminal.

In addition to designing a hand-held terminal that is compact and light, the hand-held terminal is required to have high-performance. Usually, the hand-held terminal is provided with an optical connector to communicate with a larger apparatus by using a transmission adaptor. That is, the data input into the hand-held terminal are transmitted to a larger apparatus by connecting the hand-held terminal to a transmission adaptor.

Conventionally, when the hand-held terminal communicates with the higher apparatus, an RS232C interface is used. Further, to reduce the size of the hand-held terminal, the prior art multiplexes RS232C interface signals and uses a pair of light emitting and receiving elements to send and receive data. If the hand-held terminal employs a large capacity memory, it must employ a high-speed interface to transmit data at high speed.

High-speed data transmission can be realized by employing a new interface and a connector dedicated to the interface. Installing these additional elements in addition to the conventional RS232C interface, however, is disadvantageous in terms of the compactness and light weight of the portable terminal unit.

Further, the conventional hand-held terminal is equipped with an electrical connector for connecting an external optional device. For example, a card reader for reading a magnetic card may be attached to the hand-held terminal as an optional device to add a function that is not originally present in the hand-held terminal. In this case, the external optional device is connected to the hand-held terminal with connectors and may be fixed thereto with at least one screw.

The connectors are fixed to the respective apparatuses or to printed circuit boards of the respective apparatuses. When connecting the apparatuses together, the connectors must be accurately positioned in relation to each other. This makes the connection work complicated.

In addition, connection of the external optional device makes the size of the hand-held terminal larger when the position of the connector on the hand-held terminal is not proper.

Incidentally, since the hand-held terminal can be used under various conditions, they should be sealed to prevent moisture or liquids from entering the terminal. The hand-held terminal may have a moisture resistant seal made of, for example, rubber. The seal is generally held between an upper casing and a lower casing of the hand-held terminal

The lower part of the hand-held terminal may be provided with a connector to be connected to an external device and a jack for charging a battery incorporated in the hand-held terminal. The connector and jack may be provided with a moisture-and-dust-resistant cover made of rubber or resin. When transmitting data to an external device or when charging the battery, the covers are removed. Since the removed covers may be lost, to prevent this, there may be provided a notch on the casing and a T-shaped projection on the cover. The T-shaped projection of the cover can then be inserted into the notch of the casing, to fix the cover to the casing. The cover is sometimes extended therefrom to cover an interface connector.

However, the prior art that puts rubber between an upper casing and a lower casing provides poor workability and makes the size of the housing of the hand-held terminal larger. That is, the rubber must be made large enough to prevent the rubber from peeling off and moisture from penetrating. Further, if the T-shaped projection of the connector cover is loose in the notch, the projection may easily slip out of the notch of the casing, to cause the cover to be lost and provide poor moisture resistance.

Since the above-described hand-held terminals are usually carried around, they usually employ batteries, in particular, rechargeable batteries, as a power source.

The transmission adaptor is interposed between the hand-held terminal and the larger apparatus, to transmit data from the hand-held terminal to the larger apparatus, or from the larger apparatus to the hand-held terminal. The hand-held terminal and transmission adaptor may be connected to each other through optical connectors using on interface such as a RS232C interfaces.

When transmitting data to the larger apparatus, the hand-held terminal must be connected to a transmission adaptor. While the hand-held terminal is connected to the transmission adaptor to transmit data to the larger apparatus, the transmission adaptor charges the battery of the hand-held terminal. In this case, the hand-held terminal is provided with a battery charging jack and the transmission adaptor has a battery charging terminal. When the hand-held terminal is connected to the transmission adaptor, the jack is connected to the terminal to start charging the battery of the hand-held terminal. Power for this charging operation is supplied by a power source circuit in the transmission adaptor.

However, the transmission adaptor must charge the hand-held terminal, and at the same time, carry out data transmission between the hand-held terminal and the larger apparatus. The charging operation requires a relatively large amount of power, so that the power source of the transmission adaptor must have a large capacity. This results in enlarging the power source of the transmission adaptor.

It is always required to minimize the hand-held terminal and transmission adaptor. If the power source of the transmission adaptor is large, the size of the transmission adaptor cannot be minimized. Also, when the transmission adaptor simultaneously carries out the charging and data transmission operations, the transmission adaptor consumes a large amount of power, thereby making the power source circuit of the transmission adaptor large.

Document US-5175869 discloses a data transmission system comprising a portable terminal equipment detachably received and mounted in an adaptor. The adaptor comprises a charging unit for recharging the battery of the portable terminal equipment.

### SUMMARY OF THE INVENTION

The object of the present invention is to provide a transmission adaptor having a compact power source and consuming little power.

In order to accomplish the above-mentioned objects, the present invention concerns a data communication adaptor according to claim 1.

### BRIEF DESCRIPTION OF THE DRAWINGS

The present invention will be more clearly understood from the description as set forth below with reference to the accompanying drawings, wherein:
Fig. 1 is a diagram illustrating the appearance of a conventional hand-held terminal and a memory card to be inserted therein;
Fig. 2 is a block diagram illustrating an internal constitution of a conventional hand-held terminal and a transmission adaptor;
Fig. 3A is a diagram illustrating a plan view and a bottom view of a conventional hand-held terminal and an external optional device;
Fig. 3B is a enlarged sectional view of a connector according to a prior art;
Fig. 4A is a cross-sectional view showing an upper casing, lower casing and a rubber seal according to a prior art;
Fig. 4B is explanatory view showing a connection of lower casing and a connector cover according to a prior art;
Fig. 5 is a block diagram illustrating an internal constitution of a conventional transmission adaptor;
Fig. 6 is a diagram illustrating a front view of a hand-held terminal;
Fig. 7 is a diagram illustrating a bottom view of a hand-held terminal;
Fig. 8 is a diagram illustrating a front view of a transmission adaptor;
Fig. 9 is a block diagram showing an internal constitution of a charging circuit of the transmission adaptor according to an embodiment of the present invention; and
Fig. 10 is a flow chart illustrating the battery charging control sequence of the charging circuit of the transmission adaptor according to an embodiment of the present invention.

### DESCRIPTION OF THE PREFERRED EMBODIMENTS

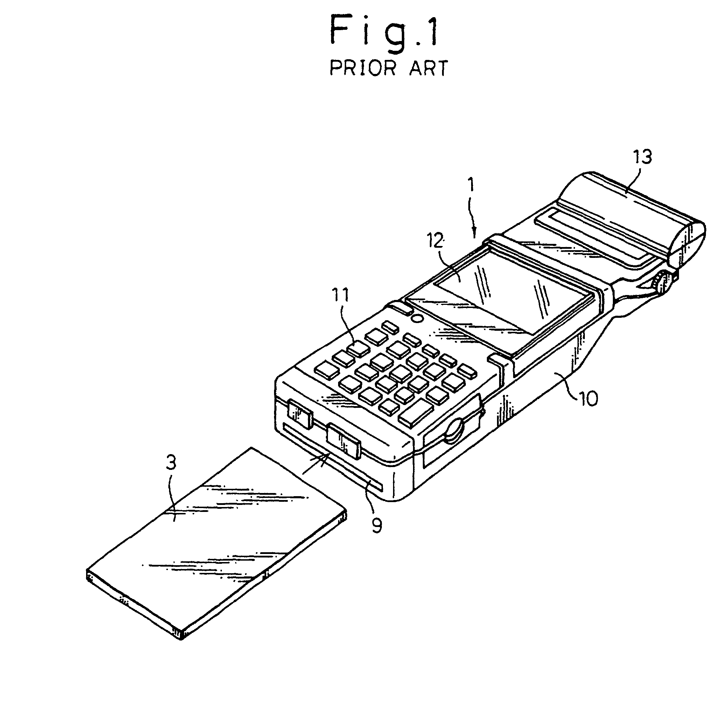

Before describing the preferred embodiments, an explanation will be given of a conventional information processing system using a portable terminal unit and a data communication adaptor therefor as shown in Figs. 1 to 5.

Figure 1 illustrates the appearance of a hand-held terminal 1 as a portable terminal unit according to a prior art. The hand-held terminal 1 has a slot 9 for inserting a memory card 3, a keyboard 11 serving as an input device, a liquid crystal display 12 serving as a display unit, a printer 13, and some connectors. The liquid crystal display 12 has a touch panel for entering data.

Various data are entered into the hand-held terminal 1, and the entered data are displayed. Since the hand-held terminal 1 is hand-carried, it is designed to be compact and light.

The hand-held terminal 1 employs a memory card 3 such as an IC card as a removable storage medium. The memory card 3 stores data entered into the hand-held terminal 1.

The memory card 3 is usually installed in the hand-held terminal 1 from an upper end or a lower end thereof. In Fig. 1, the memory card 3 is installed in the hand-held terminal 1-through the slot 9.

The hand-held terminal 1 has the keyboard 11 serving as an input device, and the display 12. The locations of these units are more or less limited due to the use thereof. Namely, the keyboard 11 and display 12 occupy substantially all of the front face of the hand-held terminal 1. The back of the hand-held terminal 1 which is not shown is provided with an optical connector. These components will be explained later.

The hand-held terminal 1 incorporates a battery serving as a power source for the hand-held terminal 1, a printer 13 for printing data, a modem for exchanging data with a larger apparatus (host computer), and a connector for connecting the hand-held terminal 1 to the host computer. As and when required, the input data is transmitted to the host computer by connecting the hand-held terminal 1 to a transmission adaptor which will be explained later.

Among these components, the battery is usually located at the lower part of the hand-held terminal 1 and the printer 13 at the upper part thereof due to the issues of weight balance and convenience in use. For compactness, the width and thickness of the hand-held terminal 1 must be minimized. The sizes of the battery and printer 13, however, are usually fixed. Accordingly, the upper and lower parts of the hand-held terminal 1 have virtually no free space due to the battery, etc.

The connector for communicating with the host computer is usually arranged at the lower part of the hand-held terminal 1 for convenience. Accordingly, it would be nearly impossible to enable loading the memory card 3 into the hand-held terminal 1 from the upper or lower end thereof if the size of the hand-held terminal is very small. To load the memory card 3 into the hand-held terminal 1 from the upper or lower end thereof, the hand-held terminal must be thicker as shown in Fig. 1.

One possibility is to load the memory card 3 into the hand-held terminal 1 from one side thereof. However, since the length of the memory card 3 is limited according to standards, the hand-held terminal 1 would have to wide enough to enclose the length of the memory card 3 if the memory card 3 is inserted entirely into the hand-held terminal 1 from the side thereof. The increased width of the hand-held terminal 1 spoils the compactness thereof.

The hand-held terminal 1 may be widened at only a portion where the memory card 3 is inserted, however, this makes the hand-held terminal 1 partly bulky, not handy to use, limits the freedom of design and makes the unit poor in appearance.

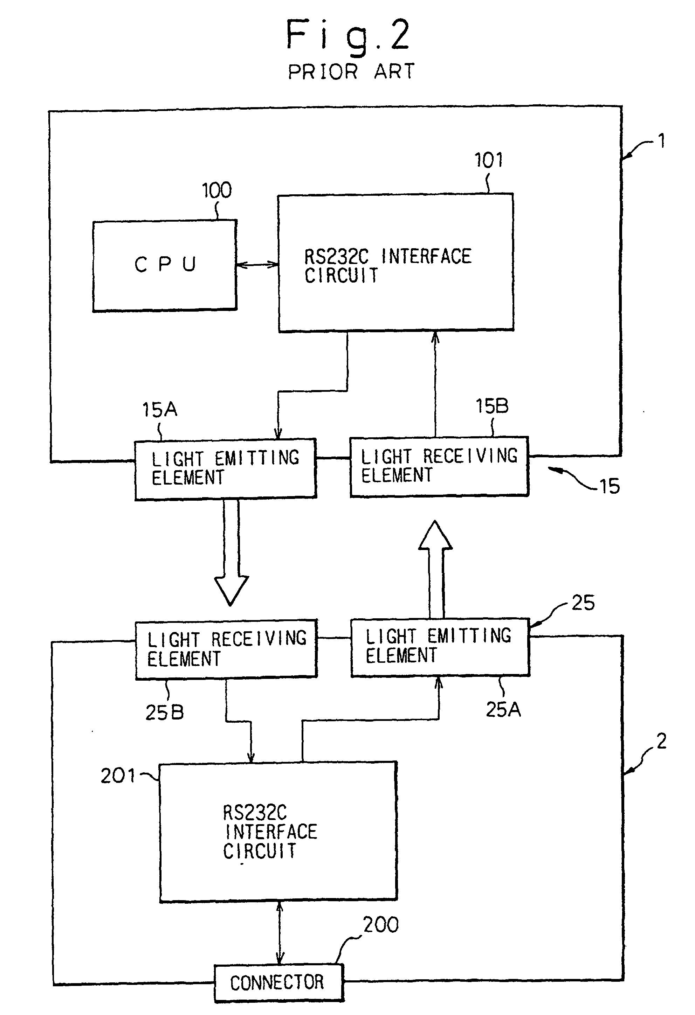

Figure 2 shows the inside of a hand-held terminal 1 and a transmission adaptor 2 according to a prior art. The hand-held terminal 1 and the transmission adaptor 2 have optical connectors 15 and 25 respectively, which send and receive data to and from each other. The optical connector 15 is comprised of a light emitting element 15A for transmitting data, and a light receiving element 15B for receiving data. The optical connector 25 is comprised of a light emitting element 25A and a light receiving element 25B.

The optical connectors 15 and 25 are non-contact connectors, which are stable even if the hand-held terminal 1 is repeatedly attached to and detached from the transmission adaptor 2. To transmit data to a larger apparatus (host computer), the hand-held terminal 1 is set on the transmission adaptor 2.

These apparatuses have, for example, RS232C interface circuits 101 and 201, and CPU 100 for totally controlling the hand-held terminal 1. To reduce the size of the hand-held terminal 1, the prior art multiplexes RS232C interface signals and uses a pair of light emitting and receiving elements 15A and 25B, and 25A and 15B.

However, if the hand-held terminal 1 employs a large capacity memory, it must employ a high-speed interface to transmit data at high speed.

High-speed data transmission can be realized by employing a new interface and a dedicated connector for the interface. Installing these additional elements in addition to the conventional RS232C interface circuit, however, is disadvantageous in terms of compactness and light weight of the portable terminal unit.

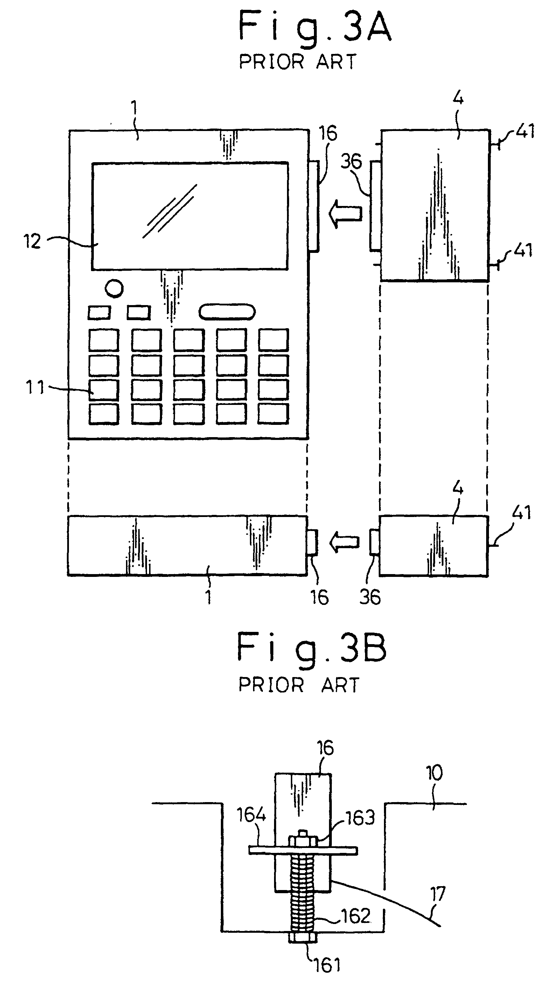

In order to add an optional function, an external optional device 3 can be attached to a portable terminal unit as shown in Fig. 3A. For example, a card reader for reading a magnetic cards may be attached to the hand-held terminal 1 to add a function that is not originally present in the hand-held terminal 1.

Figure 3A shows connection between the hand-held terminal 1 having the keyboard 11 and the display unit 12, and an external optional device 4. The external optional device 4 is connected to the hand-held terminal 1 by connectors 36 and 16 and fixed together with at least one screw 41.

The connectors 16 and 36 are fixed to the respective apparatuses or to printed boards of the respective apparatuses. When connecting the apparatuses together, the connectors must be accurately positioned in relation to each other. This makes the connection work complicated.

The position of the connectors 16 and 36 on the hand-held terminal 1 and the transmission adaptor 4 may fluctuate due to manufacturing errors. If the positions of the connectors 16 and 36 to be connected together deviate too much, it will be very difficult to connect them together. If the deviation is very large, it will be impossible to connect them to each other.

To solve this problem, connectors 16 and 36 must be accurately positioned in the manufacturing process. Such an accurate arrangement of the connectors 16 and 36 takes a great deal of labor and time. If the positions of connectors 16 and 36 deviate too much, the connectors 16 and 36 will be subject to excessive force when the hand-held terminal 1 and the transmission adaptor 4 are fixed together with screws. This will apply stress to the fitting portions of the connectors.

To cope with this situation, one of the connectors 16 and 36 may be mounted flexibly on the casing. Figure 3B shows a connector 16 fitting structure that has a certain degree of freedom in the position of a connector. This example does not fix the connector 16 to the casing 10 proper.

Threaded bolts 161 are first fixed to the casing 10. A spring 162 is arranged around each of the bolts 161. A connector 16 is set on the springs 162, and a nut 163 is set on each of the bolts 161. The springs 162 push the connector 16 upward. The connector 16 is slightly movable in a vertical direction. The diameter of the bolt 161 may be slightly smaller than that of a hole formed on a flange 164 of the connector 16 so that the connector 16 is slightly horizontally movable. Numeral 17 is a cable for connecting the connector 16 to a printed circuit board (not shown) in the hand-held terminal 1.

According to this mechanism, at least one of the connectors to be connected together is movable relative to the other, so that the accuracy in aligning the connectors need not be so accurate, and the joined connectors will not be subject to excessive stress.

Compared with fixed connectors, the movable connectors easily join corresponding apparatuses together, thereby improving workability.

This mechanism, however, additionally requires the processes of fitting bolts 161 and inserting springs 162, which increases labor and time required in manufacturing.

Usually, the hand-held terminal 1 has a moisture resistant seal 18 as shown in Fig. 4A made from, for example, rubber. The moisture resistant seal 18 is held between an upper casing 10A and a lower casing 10B of the hand-held terminal 1.

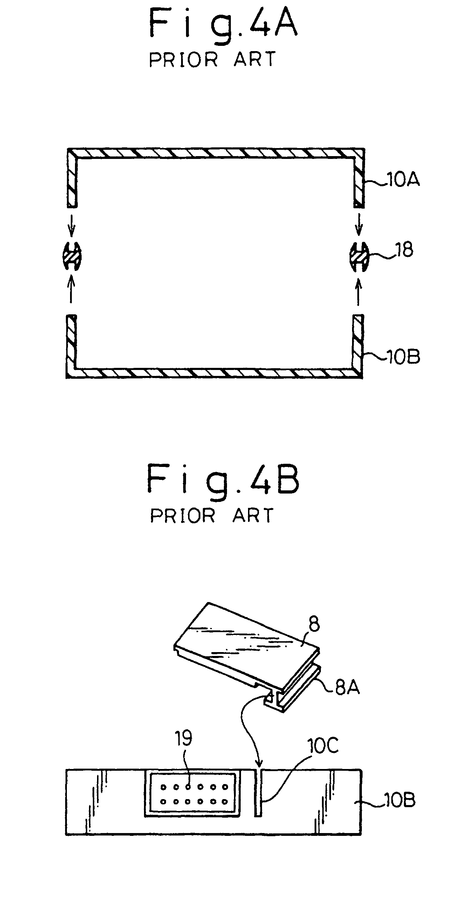

The lower part of the hand-held terminal 1 is provided with connectors to be connected to an external device and for charging a battery incorporated in the hand-held terminal 1. The connectors are provided with a moisture-and-dust-resistant cover made from rubber or resin. When transmitting data to an external device or when charging the battery, the covers are removed. However, the removed covers may be lost, or the covers on the connector, etc., may unexpectedly fall off. To prevent this, a prior art of Fig. 4B cuts a slot 10C in the lower casing 10B and a tab 8A on a cover 8. The tab 8A of the cover 8 is inserted into the slot 10C of the casing 10B, to fix the cover 8 to the casing 10B. The cover 8 covers the connector 19 when the connector 19 is not used.

The hand-held terminal 1 is usually provided with a buzzer for informing a user of the completion of data input. The buzzer must provide a predetermined volume of sound. For this purpose, the casing of the hand-held terminal 1 has an opening for the buzzer.

The prior art that uses rubber moisture resistant seal 18 between the upper casing 10A and the lower casing 10B provides poor workability. The moisture resistant seal 18 and casings 10A and 10B may form a gap that enables the rubber to peel off and moisture to enter the casing 10.

The connector cover 8 having the tab 8A may easily come off out of the slot 10C of the casing 10 and become lost making the casing 10 susceptible to moisture.

The buzzer opening is disadvantageous because it allows moisture to enter. To provide moisture resistance, there can be no buzzer opening. However, this results in insufficient sound volume because a buzzer installed in the hand-held terminal produces a small volume of sound.

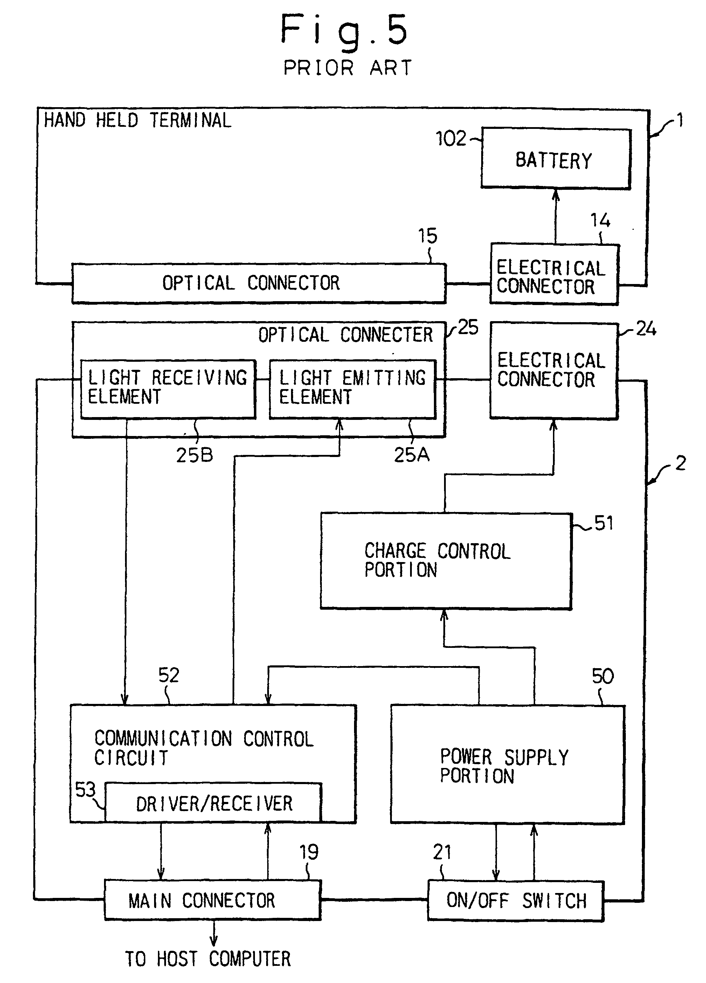

Figure 5 shows the transmission adaptor 2 and the hand-held terminal 1 according to a prior art. Numeral 102 is a battery provided in the hand-held terminal 1, for supplying power thereto. Numeral 50 is a power supply portion (power source) provided in the transmission adaptor 2. The power supply portion 50 supplies power to the transmission adaptor 1 and charges the battery 102 when ON/OFF switch 21 is ON. The ON/OFF switch is turned ON when the hand-held terminal 1 is connected to the transmission adaptor 2. Numeral 51 is a charge control portion for controlling the charging operation of the battery 102.

Numeral 52 is a communication control circuit for controlling communication between the hand-held terminal 1 and the host computer (not shown).

The transmission adaptor 2 is interposed between the hand-held terminal 1 and the host computer, to transmit data from the hand-held terminal 1 to the host computer, or from the host computer to the hand-held terminal 1. The hand-held terminal 1 and transmission adaptor 2 are connected to each other through the optical connectors 15 and 25 with the use of a interface such as an RS232C interface.

After the hand-held terminal 1 stores a given quantity of data, it must transmit the data to the host computer. The communication control circuit 52 controls data communication between the hand-held terminal 1 and the host computer. If the hand-held terminal 1 frequently transmits data to the host computer, the hand-held terminal is frequently connected to and removed from the transmission adaptor. In this case, the optical connectors 15.and 25 are advantageous because they are contactless connectors.

When transmitting data to the host computer, the hand-held terminal 1 must be connected to the transmission adaptor 2. While the hand-held terminal 1 is connected to the transmission adaptor 2 to transmit data to the host computer, the transmission adaptor 2 charges the battery 102 of the hand-held terminal 1. The lower part of the hand-held terminal 1 is provided with an electrical connector 14 for charging battery, in addition to the optical connector 15. The transmission adaptor 2 has an electrical connector 24 for charging the battery. When the hand-held terminal 1 is connected to the transmission adaptor 2, the electrical connectors 14 and 24 are connected together to start charging the battery 102 of the hand-held terminal 1. Power for this charging operation is supplied by the power supply portion 50.

The transmission adaptor 2 must charge the hand-held terminal 1, and at the same time, carry out data transmission between the hand-held terminal 1 and the host computer. The charging operation requires a relatively large amount of power, so that the power supply portion 50 of the transmission adaptor 2 must have a large capacity. This results in enlarging the power supply portion 50 of the transmission adaptor 2.

Although it is generally required to minimize the size of the hand-held terminal 1 and transmission adaptor 2, if the power supply portion 50 of the transmission adaptor 2 is large, the size of the transmission adaptor 2 cannot be reduced.

When the transmission adaptor 2 simultaneously carries out the charging and data transmission operations, the transmission adaptor 2 consumes large power, and the size of the power source circuit becomes large.

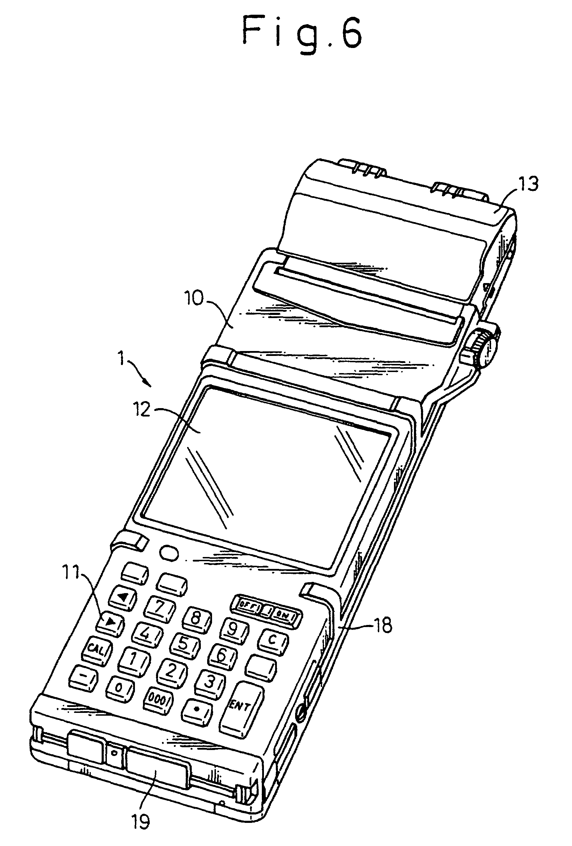

Figure 6 is a perspective view illustrating a front face of a hand-held terminal 1. In Fig. 6, numeral 10 denotes a casing of the hand-held terminal 1, 11 denotes a keyboard, 12 denotes a display unit comprised of a liquid crystal display, 13 denotes a printer, 18 denotes a moisture resistant seal, and 19 denotes a main connector for communicating with the host computer. The main connector is covered by an extended part of the moisture resistant seal 18.

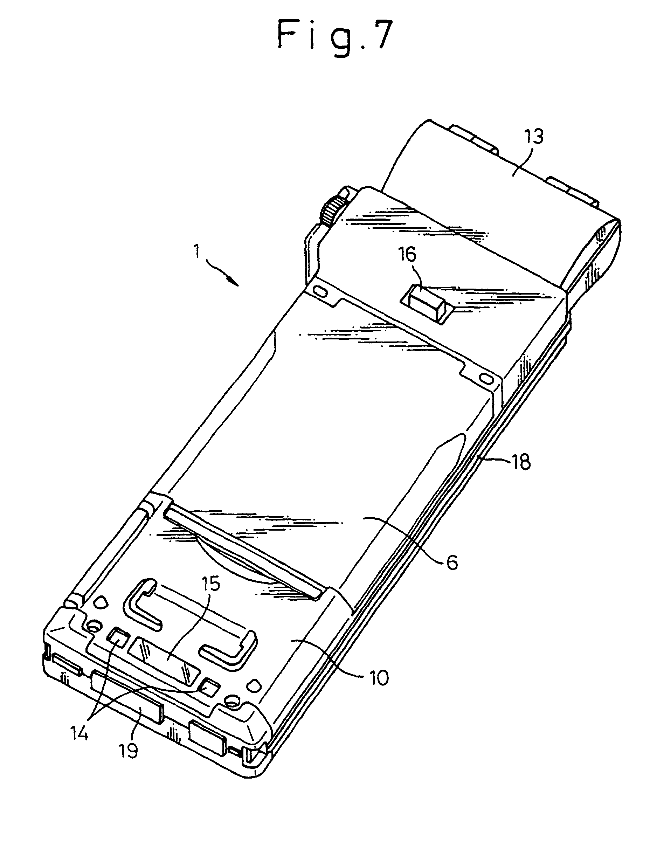

Figure 7 is a perspective view illustrating a bottom face of a hand-held terminal 1. In Fig. 7, numeral 6 denotes a lid, 10 denotes a casing of the hand-held terminal 1, 13 denotes a printer, 14 denotes electrical connector for providing power to the hand-held terminal 1 to operate the hand-held terminal or charge a battery, 15 denotes an optical connector for transmitting data, 16 denotes an auxiliary connector for connecting an external optional device, 18 denotes a moisture resistant seal, and 19 denotes a main connector for communicating with the host computer. The main connector is covered by an extended part of the moisture resistant seal 18.

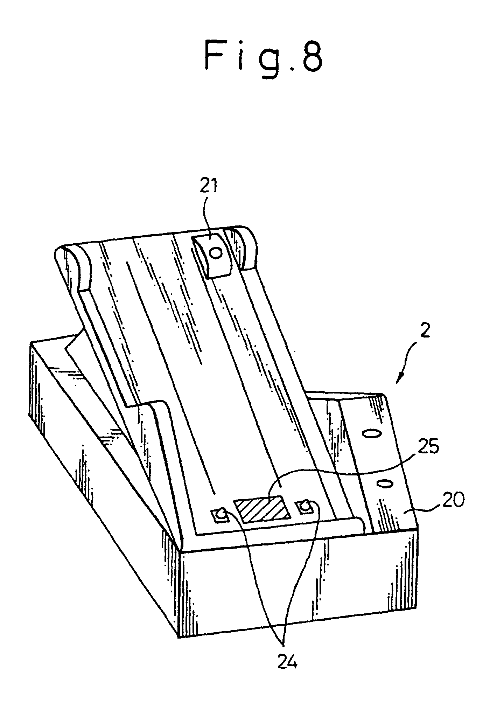

Figure 8 is a perspective view illustrating a front face of a transmission adaptor 2. In Fig. 8, numeral 20 denotes a casing of the transmission adaptor 2, 21 denotes an ON/OFF switch, 24 denotes electrical connectors for supplying power to the hand-held terminal 1 to operate the hand-held terminal or charge a battery, and 25 denotes an optical connector for transmitting data. The ON/OFF switch 21 is turned ON when the hand-held terminal 1 is placed on the transmission adaptor 2.

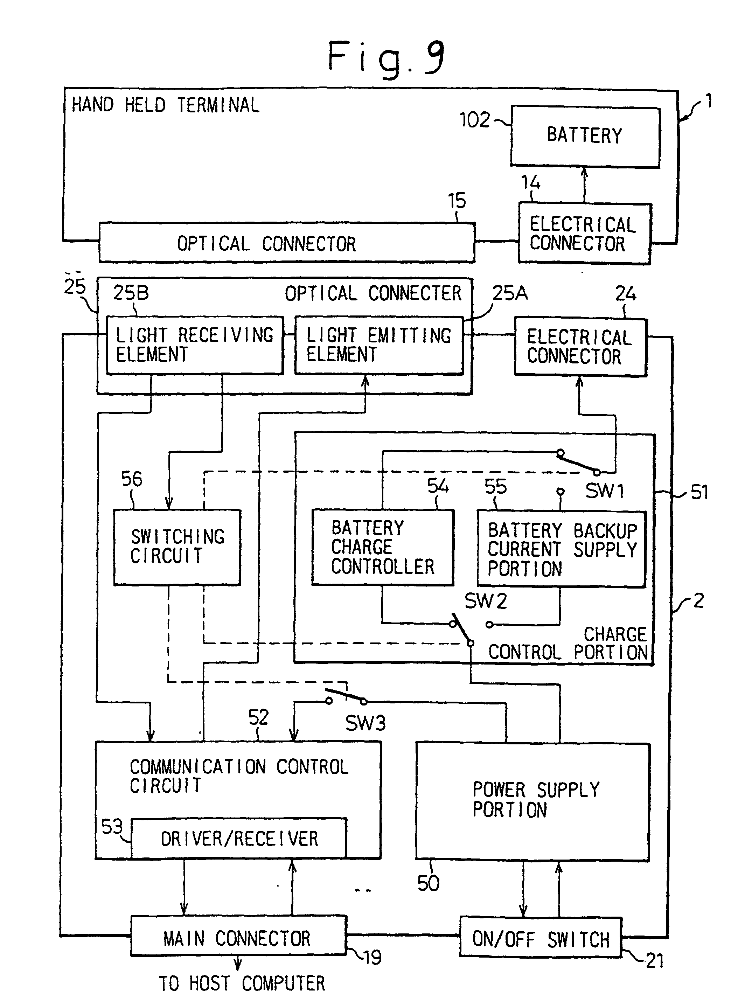

Figure 9 is a block diagram showing the internal constitution of the hand-held terminal 1 and the data transmission adaptor 2 according to the present invention.

In Fig. 9, numerals 14 and 24 denote the electrical connector, 15 denotes the optical connector, 19 denotes the main connector, 21 denotes the ON/OFF switch, 25 denotes the optical connector having the light emitting element 25A and the light receiving element 25G, 50 denotes the power supply portion, 51 denotes the charge control portion having a battery charge controller 54 and a battery backup current supply portion, 52 denotes the communication control circuit, 53 denotes a driver/receiver, 56 denotes a switching circuit and 102 denotes the battery. The battery 102 supplies power to the hand-held terminal 1. The battery 102 may be rechargeable. In this case, the battery 102 is charged by the transmission adaptor 2.

The communication controller 52 controls data communication between the hand-held terminal 1 and the host computer. The power supply portion 50 supplies power to the transmission adaptor 2 and charges the battery 102 of the hand-held terminal 1. The battery charge controller 54 controls an operation of charging the battery 102 of the hand-held terminal. The backup current supply portion 55 supplies an auxiliary current to the hand-held terminal 1. The switching circuit 56 controls a switches SW1 and SW2 to switch the battery charge controller 54 and the battery backup current supply circuit 55 from one to another. The switching circuit 56 also controls a switch SW3 to switch the power supply portion 50 to the communication control circuit 52.

The power supply portion 50 provides an electric power source of, for example 8.4 V and 0.5 A. When the hand-held terminal 1 is connected to the transmission adaptor 2, the switching circuit 56 controls the switches SW1 and SW2 to let the battery charge controller 54 supply a power of 8.4 V and 0.4 A to the battery 102 of the hand-held terminal 1, thereby charging the battery 102. When the battery 102 is fully charged, the transmission adaptor 2 disconnects the battery charge controller 54 to stop charging the battery 102 and monitors the voltage of the battery 102.

If the voltage of the battery 102 decreases to, for example, 8.2 V, the switching circuit 56 connects the battery charge controller 54 to the hand-held terminal 1, to resume the charging operation of the battery 102. In this way, the voltage of the battery 102 is kept above 70% of its rated value while the hand-held terminal 1 is in connected with the transmission adaptor 2. During the charging operation, no power is supplied to the communication control circuit 52.

Data from the hand-held terminal 1 and data from the host computer are also supplied to the switching circuit 56. When detecting transmission data from the hand-held terminal 1, the switching circuit 56 controls the switch SW3 to supply power to the communication control circuit 52. As a result, communication with the host computer through the driver-receiver 53 is enabled. At the same time, the switching circuit 56 disconnects the battery charge controller 54 from the hand-held terminal 1, to stop charging the battery 102 of the hand-held terminal 1.

If the voltage of the battery 102 drops, it will hinder data transmission from the hand-held terminal 1. Accordingly the switching circuit 56 controls the switches SW1 and SW2 of the charge control portion 51 to let the battery backup current supply portion 55 supply a power of, for example, 8.4 V and 0.2 A to the hand-held terminal 1 to maintain the data transmission from the hand-held terminal 1. The current may be minimum to continue the data transmission from the hand-held terminal 1. This current value is smaller than a current value needed for the charging operation, so that the power consumption of the transmission adaptor 2 is smaller than continuing the charging operation.

The switching circuit 56 has a timer, which is activated when data communication between the host computer and the hand-held terminal 1 is stopped. If the timer shows that the communication stopped state between the host computer and the hand-held terminal 1 is continuous for a predetermined period, for example, one minute, the switching circuit 56 determines that the data communication between the host computer and the hand-held terminal 1 is complete and controls the switch SW3 to stop power to the communication control circuit 52. At the same time, the switching circuit 56 controls the switches SW1 and SW2 of the charge control circuit 51 to let the battery charge controller 54 resume the charging operation of the battery 102.

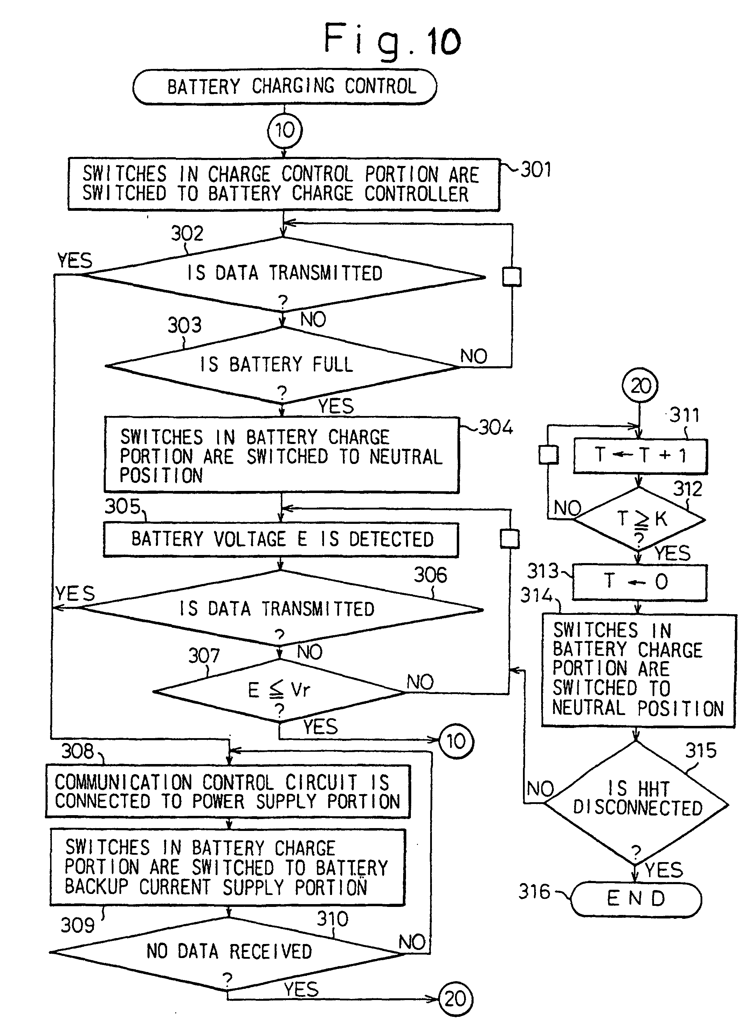

The operation of the transmission adaptor 2 when it is connected to the hand-held terminal 1 will be explained next with reference to the flowchart of Fig. 10.

Figure 10 is a flow chart illustrating the battery charging control sequence by the switching circuit 56 of the transmission adaptor 2 according to the present invention.

At step 301, the switches SW1 and SW2 in charge control portion 51 are switched to the battery charge controller 54. Namely, once the hand-held terminal 1 is connected to the transmission adaptor 2 at step 301, the switching circuit 56 controls the switches SW1 and SW2 of the charge control circuit 51 to let the battery charge controller 54 charge the battery 102. At step 302, it is determined whether or not the data is transmitted. If the data is transmitted, the control proceeds to step 308, but if the data is not transmitted, the control proceeds to step 303.

At step 303, it is determined whether or not the battery 102 is fully charged.

If the battery 102 is not fully charged, the steps 302 and 303 are repeated after some interval. If the battery 102 is fully charged, the control proceeds to step 304 and the switching circuit 56 controls the switches SW1 and SW2 of the charge control portion 51 at neutral position to disconnect the battery charge controller 54, to stop charging the battery 102. Then at step 305, the voltage E of the battery 102 is detected.

At step 306, it is determined whether or not the data is transmitted. If the data is transmitted, the control proceeds to step 308, but if the data is not transmitted, the control proceeds to step 307.

At step 307, it is determined whether or not the voltage E of the battery 102 is smaller than or equal to a predetermined value Vr. If E ≤ Vr, the control proceeds to step 301 and the switching circuit 56 controls the switches SW1 and SW2 to let the battery charge controller 54 resume the charging operation of the battery 102. But if E > Vr, the control proceeds to step 305 and steps 305 to 307 are repeated after some interval.

While carrying out the charging operation, the switching circuit 56 monitors at steps 302 and 306 a whether or not there is transmission data. If there is transmission data, the switching circuit 56 controls the switch SW3 at step 308 to start supplying power to the communication control circuit 52 to enable communication between the host computer and the hand-held terminal 1. The switching circuit 56 connects at step 309 the switches SW1 and SW2 to the battery backup current supply circuit 55 to suspend the charging operation of the battery 102 and start supplying a minimum required current to the hand-held terminal 1 to carry out data transmission.

After the data communication between the host computer and the hand-held terminal 1 starts, the switching circuit 56 monitors at step 310 whether or not the communication data is received. If no data is received, the switching circuit 56 activates the timer at step 311. The switching circuit 56 determines whether or not the value of the timer T is larger than or equal to a predetermined value K. If T < K, the control proceeds to step 311 and the counting operation of the timer is repeated. If T ≥ K at step 312, that is, the communication stopped state is continuous for a predetermined period, the control proceeds to step 313 and the timer is reset. Then the switching circuit 56 controls the switch SW3 to a neutral position at step 314 to stop power to the communication control circuit 52. At step 315, it is determined whether or not the hand-held terminal 1 is disconnected from the data transmission controller 2. If the hand-held terminal 1 is disconnected, this routine is ended at step 316, but if the hand-held terminal 1 is not disconnected, the control proceeds to step 305 and the steps 305 to 307 are repeated, and if E ≤ Vr is detected at step 307, the control proceeds to step 301 and the switching circuit 56 controls the switches SW1 and SW2 of the charge control portion 51 to let the battery charge controller 54 resume the charging operation of the battery 102.

As explained above, this embodiment stops the charging operation of the hand-held terminal 1 during the operation period of the communication control circuit 52, thereby reducing the capacity of the power supply portion 50. This results in reducing the size of the power supply portion 50 of the transmission adaptor 2, to minimize the apparatus as a whole.

If there is transmission data, this embodiment starts supplying power to the communication control circuit 52 and stops the charging operation. The hand-held terminal 1 is not required to provide a special instruction to stop the charging operation. This embodiment starts the communication control circuit 52 and stops the charging operation as and when required.

If the communication stopped state is continuous for a predetermined period, this embodiment quickly resumes the charging operation, to eliminate a loss of time in the charging operation.

## Claims

1. A data communication adaptor (2) for a portable terminal unit (1), said adaptor comprising a communication control circuit (52) for intermediating a data transmission operation between the portable terminal unit (1) and a host computer; and an electric power source portion, which electric power source portion comprises:
a battery charge controller (54) for controlling a charge operation of the battery (102) provided in the portable terminal unit (1);
a power source circuit (50) for supplying power to the circuits of the communication adaptor and for being used as a power source of the charging operation to the battery (102);
**characterised in that** said electric power source portion further comprises:
a switching circuit (56) for supplying power from said power source circuit (50) to the communication control circuit (52) and for interrupting the connection between the battery charge controller (54) and the portable terminal unit (1), while the portable terminal unit (1) and the host computer communicate with each other.

2. A data communication adaptor (2) as set forth in claim 1, wherein the power supplying operation by the switching circuit and interrupting operation by the switching circuit (56) are executed when the switching circuit (56) detects the input of the transmission data from the portable terminal unit (1).

3. A data communication adaptor (2) as set forth in claim 2, wherein the switching circuit (56) further comprises a timer actuated by the cut off of the transmission data from the portable terminal unit (1), and the switching circuit (56) stops supplying power to the communication control circuit (52) and connects the battery charge controller (54) to the portable terminal unit (1) for executing a charging operation of the battery (102) again.

4. A data communication adaptor (2) as set forth in any of claims 1-3, wherein the electric power source portion of the communication adaptor (2) further comprises a supplemental current supply circuit (55) for supplying an adequate minimum current to the portable terminal unit for carrying out said data transmission operation.

## Patentansprüche

1. Datenkommunikationsadapter (2) für eine tragbare Terminaleinheit (1), welcher Adapter eine Kommunikationssteuerungsschaltung (52) zum Vermitteln einer Datenübertragungsoperation zwischen der tragbaren Terminaleinheit (1) und einem Hostcomputer umfaßt; und einen Elektroenergiequellenabschnitt, welcher Elektroenergiequellenabschnitt umfaßt:
einen Batterieladungscontroller (54) zum Steuern einer Ladeoperation der Batterie (102), die in der tragbaren Terminaleinheit (1) vorgesehen ist;
eine Energiequellenschaltung (50) zum Zuführen von Energie zu den Schaltungen des Kommunikationsadapters und zur Verwendung als Energiequelle der Ladeoperation für die Batterie (102);
**dadurch gekennzeichnet, daß** der Elektroenergiequellenabschnitt ferner umfaßt:
eine Schaltanordnung (56) zum Zuführen von Energie von der Energiequellenschaltung (50) zu der Kommunikationssteuerungsschaltung (52) und zum Unterbrechen der Verbindung zwischen dem Batterieladungscontroller (54) und der tragbaren Terminaleinheit (1), während die tragbare Terminaleinheit (1) und der Hostcomputer miteinander kommunizieren.

2. Datenkommunikationsadapter (2) nach Anspruch 1, bei dem die Energiezufuhroperation durch die Schaltanordnung und die Unterbrechungsoperation durch die Schaltanordnung (56) ausgeführt werden, wenn die Schaltanordnung (56) die Eingabe der Übertragungsdaten von der tragbaren Terminaleinheit (1) detektiert.

3. Datenkommunikationsadapter (2) nach Anspruch 2, bei dem die Schaltanordnung (56) ferner einen Zeitgeber umfaßt, der durch das Abschalten der Übertragungsdaten von der tragbaren Terminaleinheit (1) betätigt wird, und die Schaltanordnung (56) das Zuführen von Energie zu der Kommunikationssteuerungsschaltung (52) stoppt und den Batterieladungscontroller (54) mit der tragbaren Terminaleinheit (1) zum erneuten Ausführen einer Ladeoperation der Batterie (102) verbindet.

4. Datenkommunikationsadapter (2) nach irgendeinem der Ansprüche 1-3, bei dem der Elektroenergiequellenabschnitt des Kommunikationsadapters (2) ferner eine zusätzliche Stromzufuhrschaltung (55) umfaßt, zum Zuführen eines adäquaten Mindeststroms zu der tragbaren Terminaleinheit zum Ausführen der Datenübertragungsoperation.

## Revendications

1. Adaptateur de communication de données (2) pour une unité de terminal portable (1), ledit adaptateur comprenant un circuit de commande de communication (52) pour servir d'intermédiaire pour une opération de transmission de données entre l'unité de terminal portable (1) et un ordinateur hôte ; et une partie de source de puissance électrique, laquelle partie de source de puissance électrique comprend :
un contrôleur de charge d'accumulateur (54) pour commander une opération de charge de l'accumulateur (102) qui est prévu dans l'unité de terminal portable (1) ;
un circuit de source de puissance (50) pour appliquer de la puissance sur les circuits de l'adaptateur de communication et pour une utilisation en tant que source de puissance de l'opération de charge sur l'accumulateur (102),
**caractérisé en ce que** ladite partie de source de puissance électrique comprend en outre :
un circuit de commutation (56) pour appliquer de la puissance depuis ledit circuit de source de puissance (50) sur le circuit de commande de communication (52) et pour interrompre la connexion entre le contrôleur de charge d'accumulateur (54) et l'unité de terminal portable (1) tandis que l'unité de terminal portable (1) et l'ordinateur hôte communiquent l'un avec l'autre.

2. Adaptateur de communication de données (2) selon la revendication 1, dans lequel l'opération d'application de puissance qui est réalisée par le circuit de commutation et une opération d'interruption qui est réalisée par le circuit de commutation (56) sont exécutées lorsque le circuit de commutation (56) détecte l'entrée des données de transmission en provenance de l'unité de terminal portable (1).

3. Adaptateur de communication de données (2) selon la revendication 2, dans lequel le circuit de commutation (56) comprend en outre une minuterie qui est actionnée par la coupure des données de transmission en provenance de l'unité de terminal portable (1), et le circuit de commutation (56) arrête l'application de puissance sur le circuit de commande de communication (52) et connecte le contrôleur de charge d'accumulateur (54) sur l'unité de terminal portable (1) pour exécuter une opération de charge de l'accumulateur (102) à nouveau.

4. Adaptateur de communication de données (2) selon l'une quelconque des revendications 1 à 3, dans lequel la partie de source de puissance électrique de l'adaptateur de communication (2) comprend en outre un circuit d'application de courant supplémentaire (55) pour appliquer un courant minimum adéquat sur l'unité de terminal portable pour la mise en oeuvre de ladite opération de transmission de données.
